Europäisches Patentamt

European Patent Office

Office européen des brevets

(19)

(11) Veröffentlichungsnummer: **0 264 548**
**B1**

(12) # EUROPÄISCHE PATENTSCHRIFT

(45) Veröffentlichungstag der Patentschrift:
04.04.90

(51) Int. Cl.⁴: **B23K 1/19, B23K 1/18**

(21) Anmeldenummer: 87110352.9

(22) Anmeldetag: 17.07.87

(54) Verfahren zum Befestigen von senkrecht stehenden Aussenrippen auf Rohren.

(30) Priorität: 24.10.86 DE 3636198

(43) Veröffentlichungstag der Anmeldung:
27.04.88 Patentblatt 88/17

(45) Bekanntmachung des Hinweises auf die Patenterteilung:
04.04.90 Patentblatt 90/14

(84) Benannte Vertragsstaaten:
CH FR GB IT LI

(56) Entgegenhaltungen:
EP-A- 0 188 314
DE-A- 1 950 471
DE-A- 3 033 199
FR-A- 1 568 993
GB-A- 821 046
GB-A- 1 317 983
US-A- 1 970 481

PATENT ABSTRACTS OF JAPAN, Band 9,
Nr. 326 (M-441)[2049], 21. Dezember 1985; &
JP-A-60 158 932 (HITACHI SEISAKUSHO
K.K.) 20-08-1985

(73) Patentinhaber: Gesellschaft für Schwerionenforschung mbH, Planckstrasse 1, D-6100 Darmstadt 11(DE)

(72) Erfinder: Malwitz, Eberhard, Waltherstrasse 18, D-6100 Darmstadt(DE)

(74) Vertreter: Gottlob, Peter, Kernforschungszentrum Karlsruhe GmbH Stabs. Patente und Lizenzen Weberstrasse 5, D-7500 Karlsruhe 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren gemäß dem Oberbegriff des Patentanspruches 1.

Die DE-A1 1 950 471 beschreibt ein Verfahren zum Befestigen von Querrippen auf Rohren, wobei das Rohr aufgeweitet und gleichzeitig eine Lötverbindung zwischen dem aufgeweiteten Rohr und der Rippe hergestellt wird. Weiterhin ist beim Löten das Aufbringen eines Überdruckes in einem Rohr aus GB-A 1 317 983 und FR-A 1 568 993 bekannt.

Die Herstellung von z.B. Beschleunigerstrahlrohren mit beliebigem Rohrquerschnitt und glatter Innenoberfläche, die trotz geringem Gewicht und dünner Rohrwandung genügend stabil gegen den atmosphärischen Luftdruck sind, ist aus folgenden Gründen ein technisches Problem:

Das Auflöten von Versteifungsrippen in einem Lötofen unter Vakuum oder Schutzgas gelingt nur dann einwandfrei, wenn der Lötspalt zwischen den Versteifungsrippen und dem Rohr bei Löttemperatur sehr klein, d.h. kleiner 0,1 mm ist. Das Problem wurde seither dadurch gelöst, daß vor dem Löten das Strahlrohr mechanisch mittels eines Spreizwerkzeuges örtlich aufgeweitet wurde und so eine Anlage des Rohres an die Rippen erzielt werden sollte. Ein mechanisches oder hydraulisch mechanisches Spreizwerkzeug ist jedoch technisch sehr aufwendig, so daß für beliebige Rohrquerschnittsformen dieses Verfahren nicht mehr oder nur mit ganz erheblichem Aufwand durchgeführt werden kann. Dadurch, daß das mechanische Aufspreizen vor dem Löten erfolgt, ist nicht gewährleistet, daß der enge Lötspalt auch noch beim Löten vorhanden ist. Dazu trägt z.B. der Verzug des Rohres bei hohen Löttemperaturen bei.

Um den gewünschten Löterfolg beim Auflöten der Rippen sicherzustellen, sollten Lötspalte generell so klein wie möglich gehalten sein. Dem steht jedoch entgegen, daß die entsprechenden Löcher bzw. Negativformen in den Rippen zwar sehr genau, die Rohrform bzw. die entsprechende Positivform jedoch fertigungsbedingt nur mit Abweichungen von größer gleich ± 0,1 mm gefertigt werden können. Bei der Wahl gleicher Werkstoffe ist außerdem die Einhaltung von kleinen Lötspalten nur schwer realisierbar. Der Außenumfang des Strahlrohrgrundkörpers und der Umfang der entsprechenden Öffnung in den Rippen müßten exakt übereinstimmen. Bei Fehlern wäre ein Auffädeln der Rippen auf den Rohrgrundkörper nicht mehr möglich, unerwünschte Kratzspuren, in die das Lot einschießen kann und nicht gestoppt werden würde, wären die Folge davon.

Aus diesen Gründen ist einerseits ein großer Montagespalt, andererseits im Moment des Lötens ein möglichst kleiner Lötspalt von kleiner gleich 0,05 mm wüschenswert. Die vorliegende Erfindung hat daher zur Aufgabe, ein Verfahren anzugeben, bei dem der erforderliche enge Lötspalt während des Lötens erzeugt und gewährleistet werden kann, damit eine einwandfreie Verbindung zwischen Rohrgrundkörper und Rippe ohne Einbeulen der Rohrwandung sichergestellt ist.

Zur Lösung dieser Aufgabe schlägt nun die vorliegende Erfindung die Verfahrensschritte vor, die im Patentanspruch 1 aufgeführt sind. Besonders vorteilhafte Parameter für das erfindungsgemäße Verfahren sind im Patentanspruch 2 angegeben.

Weitere Einzelheiten des erfindungsgemäßen Verfahrens werden im folgenden und anhand der Figuren 1 bis 3 näher erläutert:

Die Figur 1 zeigt einen Rohrquerschnitt mit Außenrippe mit Einbeulung, hergestellt auf herkömmliche Weise,

die Figur 2 denselben Rohrquerschnitt, hergestellt nach dem erfindungsgemäßen Verfahren und

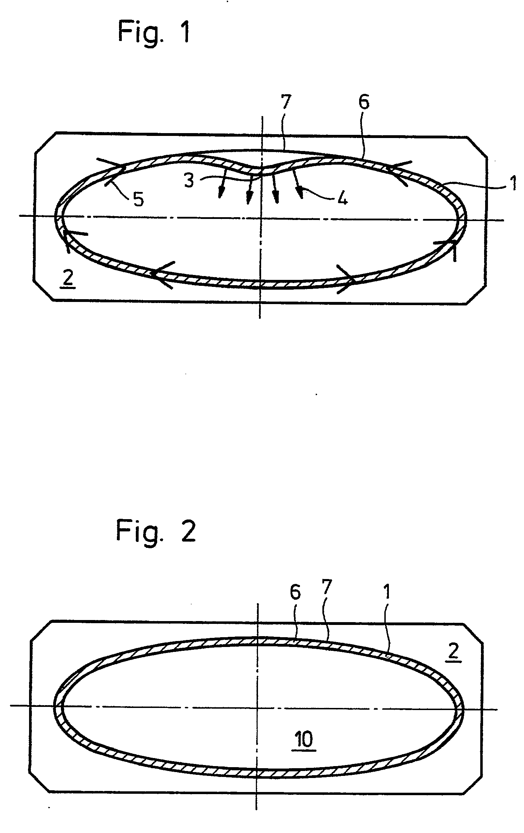

die Figur 2 Kurvenscharen thermischen linearer Ausdehnungskoeffizienten von für das Verfahren besonders geeigneten Werkstoffen.

In der Figur 1 ist die Einbeulung 3 des ovalen Rohrgrundkörpers 1 eines Strahlrohres für Vakuumbetrieb von UHV dargestellt, auf welchen Verstärkungs- oder Kühlrippen nach einfachem Aufstecken mit ihrer Innenkontur 7 aufgelötet wurden. Das Einknicken in Richtung der Pfeile 4 bewirkt die Umfangsspannung 5, die beim Löten durch die Erwärmung entensteht, begünstigt wird der Prozeß durch bestimmte Vorschädigungen, z.B. durch Einbeulungen oder wenn der Lötspalt 6 von vornherein zu eng gewählt worden ist.

In der Figur 2 ist eine einwandfreie Verbindung von Rohrgrundkörper 1 und Rippen 2 dargestellt. Der Lötspalt 6 folgt genau der Innenkontur 7, die Rippen 2 sind ohne Einbeulung auf den Grundkörper aufgelötet.

Der Lötvorgang erfolgte nun wie folgt:
Auf den Rohrgrundkörper (Breite 200 mm, Höhe 70 mm, Länge 3.000 mm, Wandstärke 0,3 mm, Material Edelstahl 1.4301) wurden Rippen (ca. 1 mm Dicke, Werkstoff Inconel 600) aufgesteckt, der Umfang des Rohres wurde so berechnet, daß bei 900°C Löttemperatur zwischen Rohrgrundkörper 1 und Rippen 2 kein Spalt mehr vorhanden ist und demnach bei Raumtemperatur der Spalt zu Montagezwecken möglichst groß wird.

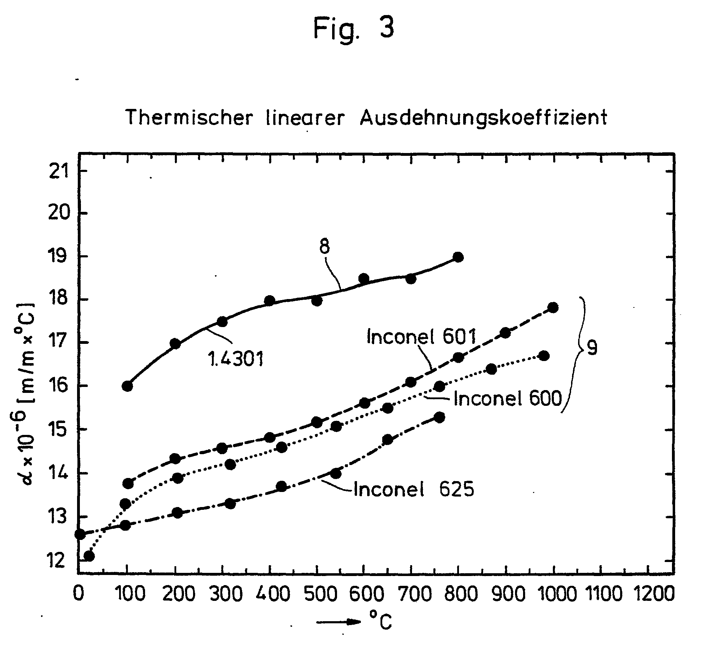

In der Figur 3 sind nun besonders geeignete Werkstoffe als Kurvenscharen ihrer linearen thermischen Ausdehnungskoeffizienten dargestellt. Die Kurve 8 zeigt die Koeffizienten des Edelstahles Werkstoff Nr. 1.4301, die Kurven 9 die entsprechenden Koeffizienten für Inconel 601, 600 und 625. Aus den Kurven 8 und 9 ist ersichtlich, daß die entsprechend höheren Koeffizienten von Edelstahl entsprechend der Kurve 8 gegen über den niedrigeren von Inconel der Kurve 9 ein Anliegen des Rohrgrundkörpers 1 an die Innenkontur 7 der Kühlrippen 2 begünstigen. Bei der, in der Figur 2 dargestellten Lötverbindung zwischen Rohrgrundkörper 1 und Rippen 7 nach dem erfindungsgemäßen Verfahren, wurde in dem Rohrinnenraum 10 während des Lötens in einem Vakuumofen ein innerer Überdruck zwischen 50 und 300 Torr aufrechterhalten, der zum genauen Anliegen der Außenseite des Rohrkörpers 1 an die Innenkontur 7 führt und der bis zum Abkühlen bzw. zur Erstarrung der Lötnaht aufrechterhalten wurde. Das Wesentliche des Verfahrens besteht nun in der Anwendung von Gasdruck zur Erzielung enger Lötspalten an Lötteilen, die infolge ihrer Dünnwandigkeit keine Formstabilität haben und anders während des Lötens nur schwer in Position zu halten sind. Bei bestimmten Rohrquerschnitten kommt dazu die Wahl verschiedener Werkstoffe mit unterschiedlichen thermischen Ausdehnungskoeffizienten für Rohr und Rippen, um bei Erreichen der Löttemperatur den engen Lötspalt zu erzielen. Das Verfahren zeichnet sich besonders dadurch aus, daß bei der Kombination von Gasüberdruck im Rohr und der Verwendung unterschiedlicher Werkstoffe für die Komponenten das Spiel zwischen Rippen und Rohr beim Auffädeln der Rippen verhältnismäßig groß sein kann und durch die unterschiedliche thermische Ausdehnung der Werkstoffpaarung der Lötspalt bei Löttemperatur nahezu 0 wird.

**Bezugszeichenliste:**

1 Rohrgrundkörper
2 Kühlrippe
3 Einbeulung
4 Einknickrichtung
5 Umfangsspannung
6 Lötspalt
7 Innenkontur
8 Ausdehnungskurve Edelstahl
9 Ausdehnungskurven Inconel
10 Rohrinnenraum

**Patentansprüche**

1. Verfahren zum Befestigen von Außenrippen (2) auf Rohren (1) mit Rohrwandung im Bereich kleiner gleich 0,5 mm und Querschnittsflächen im Bereich von größer gleich 100 cm², vorzugsweise von senkrecht stehenden Verstärkungs- oder Kühlrippen auf Metallrohren mit ovalem Rohrquerschnitt für spätere Einbeulbelastung durch äußeren Überdruck, durch Auflöten der Rippen (2) unter Druckaufbringung auf den Lötspalt (6) auf den Rohrgrundkörper (1), gekennzeichnet durch die folgenden Verfahrensschritte:
a) Auswahl der linearen thermischen Ausdehungskoeffizienten der Materialien für Rohrgrundkörper (1) und Rippen (2), so daß bei Raumtemperatur ein relativ großer Montagespalt, bei Löttemperatur jedoch ein möglichst enger Lötspalt von kleiner geich 0,05 mm zwischen Außenfläche des Rohrgrundkörpers (1) und Innenkontur (7) der Rippen (2) entsteht
b) Aufheizen der Lötverbindung in einem Vakuumofen bis auf Löttemperatur
c) Aufblasen des Rohrgrundkörpers (1) während des Lötens oder kurz vor Erreichen der Löttemperatur durch Aufbringen eines inneren Überdruckes in seinem Innenraum (10) so daß der Rohrgrundkörper (1) gegen die als Innenkontur den Rohrquerschnitt aufweisenden Fläche (7) der Kühlrippen (2) gepreßt wird
c) Aufrechterhalten des Überdruckes bis zum Abkühlen bzw. bis zur Erstarrung der Lötnaht.
2. Verfahren nach Anspruch 1, dadurch gekennzeichnet, daß der Rohrgrundkörper (1) aus Edelstahl (Werkstoff-Nr. 1.4301), die Rippen (2) jedoch aus einem Material der Gruppe Inconel 600, 601 oder 625 bestehen und daß während des Lötvorganges im Rohrgrundkörper ein innerer Druck von 50 bis 300 Torr aufrechterhalten wird.

**Revendications**

1. Procédé de fixation d'ailettes externes (2) sur des tubes (1) à paroi mince, dans le domaine inférieur ou égal à 0,5 mm et avec des surfaces de section dans le domaine supérieur ou égal à 100 cm², de préférence d'ailettes de renfort et de refroidissement sur des tubes métalliques de section ovale, pour éviter la formation ultérieure de bosses dues à la surpression externe, par soudage des ailettes (2) en présence de pression appliquée sur le corps de base du tube (1) pour régler l'écartement de soudure (6), caractérisé par les étapes de procédé suivantes :
a) choix des coefficients de dilatation thermique linéaires des matériaux du corps de base du tube (1) et des ailettes (2), de sorte qu'à température ambiante existe un écartement de montage relativement grand, et qu'à la température de soudage cependant, on ait un jeu de soudage le plus faible possible, inférieur ou égal à 0, 05 mm entre la surface externe du corps de base du tube (1) et le contour interne (7) des ailettes (2),
b) chauffer la liaison de soudure dans un four à vide jusqu'à la température de soudure,
c) gonfler le corps de base du tube (1) pendant le soudage ou juste avant d'atteindre la température de soudure en appliquant une surpression interne dans son espace interne (10) de façon à ce que le corps de base interne (1) soit appliqué contre la surface (7) des ailettes de refroidissement présentant un contour interne correspondant à la section du tube (1),
d) maintien de la surpression jusqu'au refroidissement ou bien jusqu'à la solidification du cordon de soudure.
2. Procédé selon la revendication 1, caractérisé en ce que le corps de base du tube (1) est en acier inoxydable (matériau n° 1.4301), les ailettes étant en un matériau du groupe Inconel 600, 601 ou 625 et que pendant le processus de soudage, on maintienne dans le corps de base du tube une pression interne de 50 à 300 Torr.

**Claims**

1. Method of securing external fins (2) on pipes (1) having a pipe wall with a thickness of less than 0.5 mm and cross-sectional areas greater than 100 cm², preferably for securing vertical reinforcing or cooling fins on metal pipes having an oval pipe cross-section to withstand subsequent indentation loading caused by excessive external pressure, by soldering the fins (2) onto the basic pipe body (1) with the application of pressure to the soldering gap (6), characterised by the following method steps:
a) selecting the linear, thermal expansion coefficients of the materials for the basic pipe body (1) and fins (2), so that a relatively large assebly gap is produced at amient temperature, but as narrow a soldering gap as possible, of less than 0.05 mm, is produced at soldering temperature between the outer surface of the basic pipe body (1) and the inner configuration (7) of the fins (2);

b) heating the soldered joint in a vacuum furnace up to soldering temperature;

c) inflating the basic pipe body (1) during the soldering process, or shortly before the soldering temperature is reached, by applying an excessive internal pressure in its interior (10), so that the basic pipe body (1) is pressed against the surface (7) of the cooling fins (2), which surface has, as its inner configuration, the cross-section of the pipe; and

d) maintaining the excessive pressure until the soldered joint has cooled, that is to say until it has hardened.

2. Method according to claim 1, characterised in that the basic pipe body (1) is formed stainless steel (material No. 1,4301), but the fins (2) are formed from a material of the group including Inconel 600, 601 or 625, and in that, during the soldering process, an internal pressure of 50 to 300 torrs is maintained in the basic pipe body.

Fig. 1

Fig. 2

# Fig. 3

Thermischer linearer Ausdehnungskoeffizient